# EUROPÄISCHE PATENTSCHRIFT

(11) **EP 3 399 114 B1**
(45) Veröffentlichungstag und Bekanntmachung des Hinweises auf die Patenterteilung: **15.07.2020**
(21) Anmeldenummer: 17169206.4
(22) Anmeldetag: 03.05.2017
(51) Int. Cl.: E03F 5/10, E02B 8/04, G05D 7/01

(54) **ABFLUSSMENGENREGLER FÜR EINEN AUSLAUF EINES FLÜSSIGKEITSBEHÄLTERS**
FLOW RATE REGULATOR FOR AN OUTLET OF A LIQUID CONTAINER
DÉBITMÈTRE POUR LA SORTIE D'UN RÉCIPIENT DE LIQUIDE

(43) Veröffentlichungstag der Anmeldung: 07.11.2018
(73) Patentinhaber: Steinhardt GmbH, 65232 Taunusstein (DE)
(72) Erfinder: Steinhardt, Jörg-Michael, 65232 Taunusstein (DE)
(74) Vertreter: Quermann, Helmut

(56) Entgegenhaltungen:
- EP-A2- 0 132 775
- DE-A1- 2 523 942
- DE-A1- 19 615 206

## Beschreibung

Die Erfindung betrifft einen Abflussmengenregler entsprechend dem Oberbegriff von Anspruch 1.

Bei Regenrückhaltungen und anderen Speicherräumen wird die ablaufende Wassermenge im Allgemeinen durch Veränderung der Querschnittsfläche der Öffnung des Rohrstutzens geregelt. Das Abblenden der Öffnung darf jedoch nicht direkt proportional zur Wasserhöhe erfolgen, sondern muss mit zunehmender Stauhöhe gesteuert werden, in Richtung auf eine weniger rasche Abblendung.

Ein Abflussmengenregler ist durch Steinhardt GmbH, Roederweg 8 - 10, D-65232 Taunusstein-Bleidenstadt als "Steinhardt HYDROSLIDE" in der Bauart "Standard Mini" bekannt geworden. Diese Bauart ist für
kleinere Stauhöhen und kleinere Bauwerke konzipiert. Durch die kompakte Ausführung werden bei großen Abflüssen Bauwerkskosten minimiert. Bei dem Abflussmengenregler ist der Schwimmer, der als Zylinder ausgebildet ist, mit dessen Zylinderachse parallel zu der in der Grundplatte gelagerten Lagerachse, unmittelbar mit der einteiligen Blende verschweißt. Diese weist im Bereich einer unteren Stirnkante eine Steuerkurve zum geregelten Abblenden der Öffnung des Rohrstutzens auf.

Ein Abflussmengenregler der eingangs genannter Art ist aus der EP 0 132 775 A2 bekannt. Der aus der EP 0 132 775 A2 bekannte Abflussmengenregler weist die Merkmale des Oberbegriffs des Patentanspruchs 1 auf.

Aus der DE 25 23 942 A1 ist eine Drosselvorrichtung für den Auslauf von Flüssigkeits-Sammelbecken, insbesondere Regenrückhaltebecken in Kanalisationssystemen mit einem der Auslauföffnung zugeordneten Drosselschieber bekannt. Der Drosselschieber ist dabei bewegungsschlüssig mit einem im Becken angebrachten Schwimmer verbunden, und seine Steuerkante und die Auslauföffnung werden einander derart zugeordnet und angepasst, dass die freigelassene Querschnittsfläche der Auslauföffnung auf eine weitgehend konstante, vom Flüssigkeitsspiegel unabhängige Durchflussmenge einstellbar ist.

In der DE 196 15 206 A1 ist ebenfalls eine schwimmergesteuerte Drosselvorrichtung zur Drosselung des Abflusses, beispielsweise aus Regenüberlaufbecken, beschrieben. Diese weist ein schwenkbares Drosselelement, das unterwasserseitig in eine Position hinter einer Öffnung verschwenkt werden kann, in der der Querschnitt der Öffnung gedrosselt ist, auf. Die Schwenkachse verläuft senkrecht zu der Fläche der zu drosselnden Öffnung. Zur Bewegung des Drosselelementes dient ein Schwimmer, der zusammen mit dem Drosselelement in einer festen Winkelposition um die gleiche Schwenkwelle verschwenkt wird.

Aufgabe der vorliegenden Erfindung ist es, einen Abflussmengenregler, der die Merkmale des Oberbegriffs des Patentanspruchs 1 aufweist, so weiterzubilden, dass dessen universelle Einsetzbarkeit deutlich erhöht ist.

Gelöst wird die Aufgabe durch einen Abflussmengenregler, der gemäß den Merkmalen des Patentanspruchs 1 ausgebildet ist.

Bei dem erfindungsgemäßen Abflussmengenregler ist vorgesehen, dass die Anordnung von Blende und Schwimmer bezüglich einer die Lagerachse durchsetzenden Vertikalebene aus einer ersten Position in eine bezogen auf die Vertikalebene gespiegelte zweite Position ummontierbar ist, wobei der Schwimmer im Bereich eines Endes mit der Blende unmittelbar verbunden ist oder ein Schwimmerarm die Blende und den Schwimmer verbindet, wobei der Schwimmer von der Blende demontierbar und in einer, bezogen auf einen Hebelarm zwischen Schwimmer und Drehachse der Blende, um 180° gedrehten Stellung montierbar ist.

Da die Blende bezüglich der die Lagerachse durchsetzenden Vertikalebene unsymmetrisch ist, wird auch die Blende von der Lagerachse demontiert und in der gespiegelten Position wieder montiert.

Bei dem Abflussmengenregler kann der Schwimmer sowohl rechts als auch links des Rohrstutzens angeordnet werden, bezogen auf die durch die Lagerachse gehende Vertikalebene. So ist der Abflussmengenregler in aller Regel als vorgefertigte Einheit ausgebildet, die insbesondere aus Edelstahl besteht, wobei die Grundplatte des Abflussmengenreglers im Bereich des Auslaufs des Flüssigkeitsbehälters im Bereich einer vertikalen Innenfläche einer Behälterwand befestigt wird. Vom Rohrstutzen gelangt die Flüssigkeit durch eine Öffnung in der Behälterwand aus dem Flüssigkeitsbehälter. Hierbei erfolgt das Abblenden der Auslauföffnung nicht direkt proportional zur Einstauhöhe der Flüssigkeit aufgrund der Ansteuerung der Blende über den Schwimmer in Kombination mit einer Steuerkante der Blende.

Ungeachtet des Anbringens des Abflussmengenreglers mit der Grundplatte an der Wandung des Flüssigkeitsbehälters erlaubt die erfindungsgemäße Gestaltung des Abflussmengenreglers dessen Positionierung am Flüssigkeitsbehälter in der einen, ersten Position oder in der anderen, ummontierten zweiten Position. Es ist somit nicht erforderlich, für diese beiden Anwendungsfälle zwei separate Ausführungen des Abflussmengenreglers bereitzuhalten.

Es ist nicht erforderlich, dass der Schwimmer unmittelbar mit der Blende verbunden ist. Der Abflussmengenregler kann derart gestaltet sein, dass der Schwimmer über einen Schwimmerarm mit der Blende verbunden ist. Es ist dann nur erforderlich, eine Trennung dieser Anordnung vorzusehen, sodass der Schwimmer in der gedrehten Stellung bezüglich der Blende montiert werden kann. In jeder der gedrehten Stellungen weist somit der Schwimmer von der Wandung weg, sodass es nicht erforderlich ist, für die andere der beiden Positionen Änderungen in der Wandung des Flüssigkeitsbehälters vorzusehen.

Es wird als besonders vorteilhaft angesehen, wenn der Schwimmer als Zylinder ausgebildet ist. Der Schwimmer lässt sich damit besonders einfach herstellen. Überdies ist insbesondere vorgesehen, dass die Zylinderachse des Schwimmers horizontal angeordnet ist. Somit erstreckt sich der Schwimmer über eine relativ große axiale Länge in horizontaler Richtung, womit sich ein günstiger Auftriebseffekt und eine damit vorteilhafte Kraftübertragung auf die Blende ergibt.

Vorzugsweise ist der Schwimmer im Bereich eines Endes mit der Blende unmittelbar verbunden. Damit baut die Anordnung von Blende und Schwimmer sehr kompakt. Alternativ kann, wie vorstehend dargelegt, ein Schwimmerarm die Blende und den Schwimmer verbinden. Bei dieser Anordnung lassen sich wesentlich höhere Stauhöhen mit dem Abflussmengenregler beherrschen.

Ist ein Schwimmerarm vorgesehen, der den Schwimmer und die Blende verbindet, wird es als besonders vorteilhaft angesehen, wenn der Schwimmerarm fest mit der Blende verbunden ist und der Schwimmer lösbar mit dem Schwimmerarm verbunden ist. Dies ermöglicht eine besonders einfache Ummontage, die in Abstand zur Blende erfolgen kann, somit in einem gut zugänglichen Bereich.

Eine baulich besonders einfache Gestaltung ergibt sich, wenn der Schwimmerarm als Vierkantrohr ausgebildet ist und der Schwimmer mit einer im Querschnitt viereckigen Aufnahme für den Schwimmerarm versehen ist. Somit kann die Verbindung von Schwimmerarm und Schwimmer als einfache Steckverbindung ausgeführt sein. Es ist dann vorzugsweise nur erforderlich, Verbindungs- bzw. Sicherungsmittel vorzusehen, in Art einer Schrauben-Mutter-Verbindung, die im Überlappungsbereich von Vierkantrohr und viereckiger Aufnahme vorgesehen ist.

Ist der Schwimmerarm als Vierkantrohr ausgebildet, wird es als besonders vorteilhaft angesehen, wenn die Blende in einen Schlitz des Schwimmerarms eingesteckt und in diesem Bereich des Schwimmerarms mit diesem verbunden ist, insbesondere verschweißt ist. Es ergibt sich auf diese Art und Weise eine besonders einfache Aufnahme für die Blende im Schwimmerarm, bei gleichzeitig fester Verbindung von Blende und Schwimmerarm.

Grundsätzlich kann die Blende einteilig sein, um den erfindungsgemäßen Zweck zu verwirklichen. Es wird allerdings als besonders vorteilhaft angesehen, wenn die Blende zweiteilig ist. Die zweiteilige Blende ermöglicht es, auf einfache Art und Weise, das Abblendverhalten des Abflussmengenreglers zu verändern.

So ist insbesondere vorgesehen, dass die Blende ein Lagerteil, das schwenkbar in der Lagerachse gelagert und mit dem Schwimmer verbunden ist, sowie ein mit dem Lagerteil verbundenes Blendenteil zum Abblenden der Öffnung des Rohrstutzens aufweist. Das Lagerteil hat somit die Funktion, die Anordnung von Blende und Schwimmer bzw. die Anordnung von Blende, Schwimmerarm und Schwimmer in der Lagerachse zu lagern, während das mit dem Lagerteil verbundene Blendenteil die Funktion des Abblendens der Auslauföffnung besitzt.

Besonders vorteilhaft ist es, wenn das Blendenteil und das Lagerteil jeweils als Platte ausgebildet sind und Blendenteil und Lagerteil im Bereich zugewandter Flächenseiten überlappend angeordnet miteinander verbunden sind, wobei in der ersten Position das Blendenteil auf der einen Seite des Lagerteils angeordnet ist und in der zweiten, ummontierten Position das Blendenteil auf der dieser Seite abgewandten Seite des Lagerteils, bei sonst unveränderlicher Position des Blendenteils bezüglich des Lagerteils, angeordnet ist.

Demzufolge ist es beim Ummontieren der Anordnung von Blende und Schwimmer auf eine Position des Schwimmers von rechts nach links bzw. von links nach rechts nur erforderlich, das Lagerteil von der Lagerachse zu demontieren, den Schwimmer bezüglich des Lagerteils zu demontieren und an diesem in der um 180° gedrehten Stellung wieder zu montieren, das Blendenteil vom Lagerteil zu lösen und in derselben Position zum Lagerteil auf anderen Seite des Lagerteils wieder mit diesem zu verbinden, und das Lagerteil bezüglich dessen Position vor der Demontage gespiegelt wieder an der Lagerachse zu montieren. Ist diese Ummontage erfolgt, weist der Abflussmengenregler dasselbe Abblendverhalten auf, wie bei der vorherigen Montageposition.

Die Wahl der jeweiligen Montageposition wird in Abhängigkeit von den räumlichen Bedingungen im Bereich der Wand des Flüssigkeitsbehälters gewählt. Schließt sich an die Wand beispielsweise senkrecht zu dieser in unmittelbarer Nähe des Auslaufs des Flüssigkeitsbehälters eine Wand an, ist nur eine Montage des Abflussmengenreglers in einer Position der Anordnung von Blende und Schwimmer möglich, wenn der Schwimmer auf der dieser weiteren Wand abgewandten Seite der Öffnung des Rohrstutzens angeordnet ist, bei entsprechend diesem Einsatz gewählter Position des Schwimmers und gewählter Position des Blendenteils bezüglich des Lagerteils, sodass gewährleistet ist, dass das Blendenteil unmittelbar benachbart der Öffnung des Rohrstutzens angeordnet ist und die Blendenfunktion verwirklichen kann.

Es wird als besonders vorteilhaft angesehen, wenn das Blendenteil bezüglich des Lagerteils in unterschiedlichen Stellungen montierbar ist, zwecks Veränderung des Abblendverhaltens in Abhängigkeit von der Hubstellung des Schwimmers.

Bei Ausbildung der Blende als Blendenteil und Lagerteil ist der Schwimmer mit dem Lagerteil verbunden, insbesondere bei zwischen Lagerteil und Schwimmer angeordnetem Schwimmerarm. Das Lagerteil ist schwenkbar in der Lagerachse gelagert.

Vorzugsweise sind Mittel zum axialen Sichern der Blende bzw. des Lagerteils in der Lagerachse vorgesehen. Bei einfachster Gestaltung wird die Anordnung von Blende und Schwimmer im Bereich der Blende auf die Lagerachse aufgesteckt und mittels einer Schraube axial gesichert. Bei Anlage der Blende bzw. des Lagerteils an einem Ansatz der Lagerachse ist eine definierte Aufsteckposition in Horizontalrichtung sichergestellt, somit eine eindeutige, präzise Position der Blende bzw. des Blendenteils bezüglich des Rohrstutzens im Bereich dessen Öffnung.

Weitere Merkmale der Erfindung sind in der Beschreibung der Zeichnung der Figuren, den Figuren und in den Unteransprüchen dargestellt, wobei bemerkt wird, dass alle Einzelmerkmale und Kombinationen von Einzelmerkmalen erfindungswesentlich sind.

In der Zeichnung ist die Erfindung anhand einer Ausführungsform beispielsweise dargestellt, ohne auf diese Ausführungsform beschränkt zu sein.

Es zeigt:
- Fig. 1: den Abflussmengenregler in einer ersten Montageposition, veranschaulicht in einer räumlichen Darstellung,
- Fig. 2: den in Fig. 1 gezeigten Abflussmengenregler in einer Seitenansicht, senkrecht zu einer vertikal angeordneten Ebene gesehen,
- Fig. 3: einen Vertikalschnitt durch den Abflussmengenregler, im Bereich der Achse der Lagerachse,
- Fig. 4: den Abflussmengenregler gemäß der Fig. 1 bis 3 in einer Explosionsdarstellung,

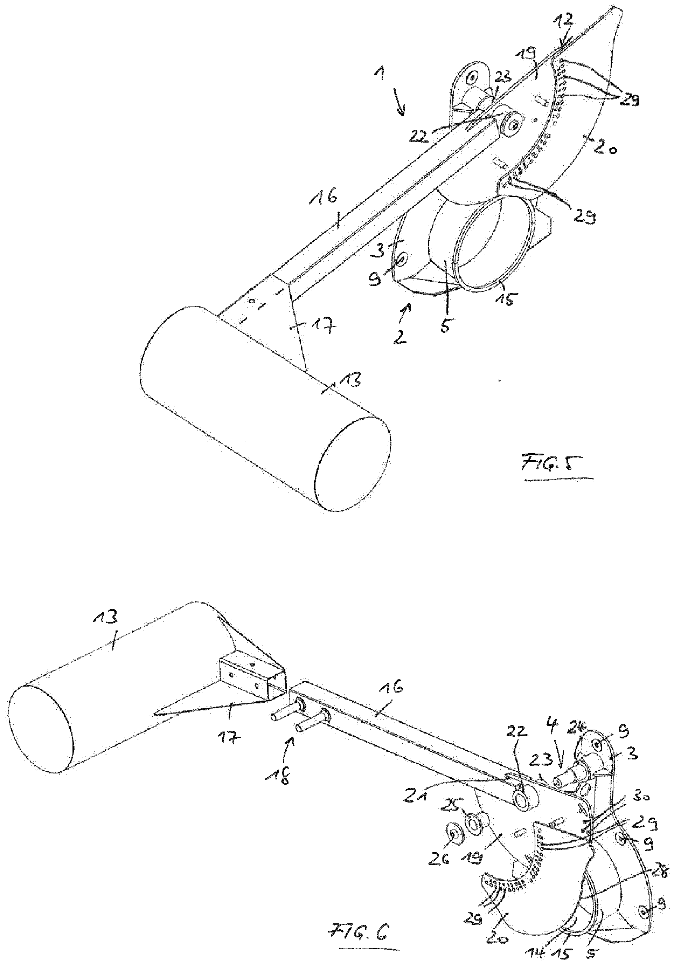

- Fig. 5: den ummontierten Abflussmengenregler, somit in einem zweiten Montagezustand,
- Fig. 6: den Abflussmengenregler gemäß Fig. 5 in einer Explosionsdarstellung.

### Figurenbeschreibung

Ein Abflussmengenregler 1 für einen Auslauf eines Flüssigkeitsbehälters, beispielsweise eines Beckens besteht im Wesentlichen aus Edelstahl. Ein Basiselement 2 des Abflussmengenreglers 1 weist eine Grundplatte 3, einen Lagerachse 4 sowie einen Rohrstutzen 5 auf. Die Lagerachse 4 und der Rohrstutzen 5 erstrecken sich mit ihren jeweiligen Längsachsen - Rotationsachsen - 6, 7 senkrecht zur Grundplatte 3. Die Lagerachse 4, die zur Grundplatte 3 hin erweiternd abgestuft ausgebildet ist, ist mit der Grundplatte 3 verschweißt. Der Rohrstutzen 5 ist gleichfalls mit der Grundplatte 3 verschweißt. Der Rohrstutzen 5 dient dem Durchleiten der Flüssigkeit, die von diesem durch den Auslauf des Beckens, konkret eine konzentrisch zum Rohrstutzen 5 angeordnete, entsprechend dem Durchmesser des Rohrstutzens 5 ausgebildete Öffnung in einer Wand 8 des Beckens gelangt. Die plattenförmige Grundplatte 3 ist mittels diverser Schrauben durch die Wand 8 des Beckens hindurch verbolzt. Die Schrauben sind in von der Grundplatte 3 aufgenommene Hülsen 9 eingeschraubt. Verstärkungsbleche 10 verstärken die Verbindung von Lagerachse 4 und Grundplatte 3 bzw. von Rohrstutzen 5 und Grundplatte 3. Eines der Verstärkungsbleche 10, das mit dem Rohrstutzen 5 verbunden ist, ist zusätzlich mit einem Loch 11 als Aufnahme für eine Hubhilfe beim Montieren des Abflussmengenreglers 1 versehen.

Die Achsen 6 und 7 verlaufen horizontal, senkrecht zur Wand 9.

Der Abflussmengenregler 1 weist ferner eine Blende 12 und einen mit dieser verbundenen Schwimmer 13 auf. Blende 12 und Schwimmer 13 sind mehrteilig ausgebildet, allerdings fest miteinander verbunden, sodass eine Schwenkbewegung des Schwimmers 13 um einen definierten Winkel um die Lagerachse 4 zu einem Schwenken der Blende 12 in entsprechendem Winkel führt.

Die Blende 12 ist senkrecht zur Lagerachse 4, somit senkrecht zur Längsachse 6 der Lagerachse 4 angeordnet. Die der Grundplatte 3 abgewandte Öffnung 14 des Rohrstutzens 5 ist entsprechend der Schwenkstellung der Blende 12 durch diese abblendbar. Eine kreisringförmige Stirnkante 15, wobei die durch die Stirnkante 15 gebildete Ebene die Öffnung 14 bildet, ist in unmittelbarer Nähe der Blende 12 angeordnet.

Der Schwimmer 13 ist als Zylinder ausgebildet. Die Zylinderachse ist horizontal angeordnet und verläuft parallel zu den Längsachsen 6, 7. Der Schwimmer 13 ist im Bereich seines der Wand 8 zugewandten Endes mit einem Schwimmerarm 16 verbunden, der im Bereich des dem Schwimmer 13 abgewandten Endes mit der Blende 12 verbunden ist. Der Schwimmerarm 16 ist als Vierkantrohr ausgebildet. Der Schwimmer 13 ist mit einer im Querschnitt viereckigen Aufnahme 17 für den Schwimmerarm 16 verschweißt. Bei in die Aufnahme 17 endseitig eingestecktem Schwimmerarm 16 dienen Schraubverbindungen 18 dem lösbaren Verbinden von Schwimmerarm 16 und Schwimmer 13.

Die Blende 12 ist zweiteilig ausgebildet. Sie weist ein Lagerteil 19, das schwenkbar in der Lagerachse 4 gelagert und über den Schwimmerarm 16 mit dem Schwimmer 13 verbunden ist, sowie ein mit dem Lagerteil 19 verbundendes Blendenteil 20 zum Abblenden der Öffnung 14 auf. Sowohl Lagerteil 19 als auch Blendenteil 20 sind als Platte ausgebildet. Das Lagerteil 19 ist im Wesentlichen halbkreisförmig ausgebildet und nimmt im Bereich eines Endes eines Durchmesserabschnitts den Schwimmerarm 16 auf. Hierbei ist das Lagerteil 19 in einen Schlitz 21 des Vierkantrohr-Schwimmerarms eingesteckt und in diesem Bereich des Schwimmerarms 16 mit dem Lagerteil 19 verschweißt. Somit bilden der Schwimmerarm 16 und das Lagerteil 19 eine nicht lösbare Einheit.

Benachbart dem dem Lagerteil 19 zugewandten stirnseitigen Ende des Schwimmerarms 16 durchsetzt ein Loch das Lagerteil 19 und es sind dort beidseitig des Lagerteils 19 Lagerbuchsen 22, 23 angeordnet und mit dem Lagerteil 19 verschweißt. Im Bereich dieser beiden Lagerbuchsen 22, 23 wird das Lagerteil 19 auf die Lagerachse 4 gegen einen Anschlag 24 der Lagerachse 4 aufgesteckt. Zum axialen Sichern des in der Lagerachse 4 gelagerten Lagerteils 19 dient eine weitere Lagerbuchse 25, die in die Lagerbuchse 22 eingesteckt und mittels einer Schraubverbindung axial festgelegt wird, wobei eine Schraube 26 in eine Gewindebohrung 27 der Lagerachse 4 eingeschraubt ist.

Das als Platte ausgebildete Lagerteil 19 und das als Platte ausgebildete Blendenteil 20 sind im Bereich zugewandter Flächenseiten überlappend angeordnet miteinander verbunden. Hierbei bildet die der Lagerachse 4 abgewandte Stirnseite eine Steuerkante 28 zum Abblenden der Öffnung 14 zwischen der Steuerkante 28 entsprechend der Drehwinkelposition des Blendenteils 20 bezüglich der Stirnkante 15 des Rohrstutzens 5.

Um die Universalität des insoweit beschriebenen Abflussmengenreglers 1 zu erhöhen, kann das Blendenteil 20, das eine Vielzahl von nur teilweise sichtbaren Lochbohrungen 29 aufweist, in unterschiedlichsten Winkelstellungen, bezogen auf eine Schwenkachse bezüglich der Längsachse 6 der Lagerachse 4 mit dem Blendenteil 20 verbunden werden, und überdies auch näher oder weiter weg bezüglich dieser Längsachse 6 insgesamt bezüglich des Blendenteils 20 oder nur in Teilbereichen des Blendenteils 20 gesehen, aufgrund von in definierten Lochmustern im Lagerteil 19 vorgesehenen Lochbohrungen 30. Das Verbinden von Lagerteil 19 und Blendenteil 20 erfolgt über geeignete Befestigungsmittel, beispielsweise Schrauben-Bolzen-Verbindungen, die Lochbohrungen 29 und 30 durchsetzen .

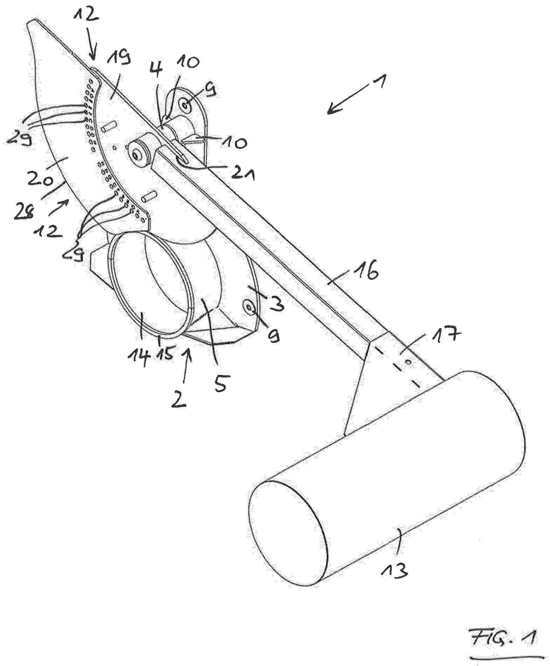

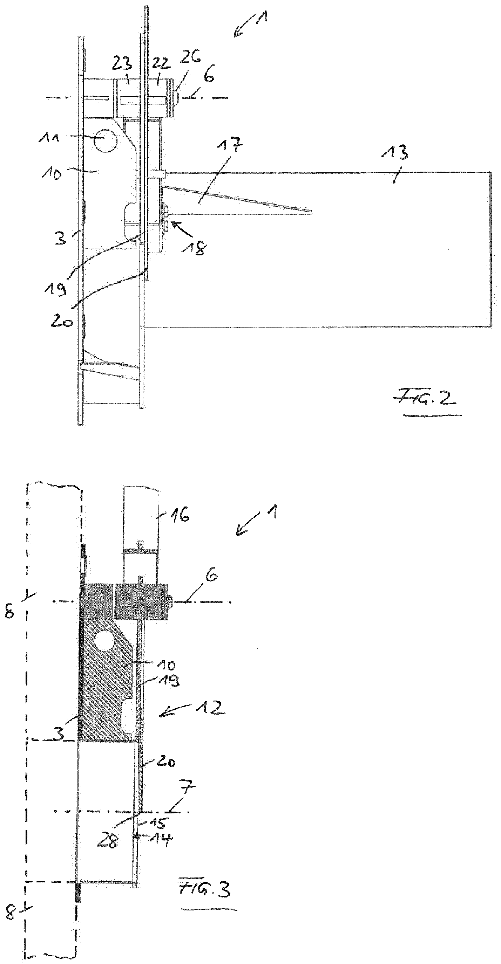

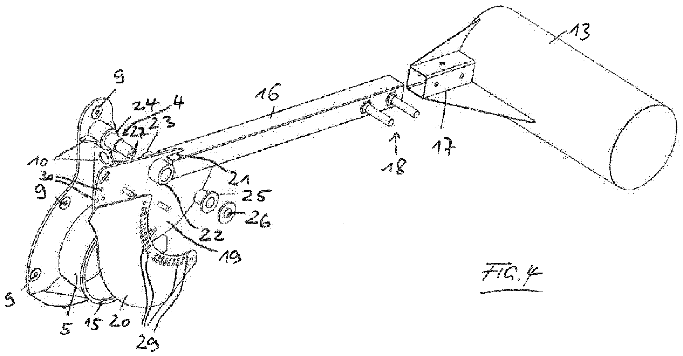

Die weitere Universalität des Abflussmengenreglers 1 ergibt sich aufgrund der beschriebenen Anbindung des Schwimmers 13 an die Blende 12. Ist beispielsweise senkrecht zur Wand 8 eine andere, sich vertikal erstreckende, nicht veranschaulichte Wand vorgesehen, sodass nur auf der dieser anderen Wand abgewandten Seite der Lagerachse 4 Platz für die Anbringung des Schwimmers 13 vor der Wand 8 ist, wird die eine Montagemöglichkeit des Abflussmengenreglers 1 verwendet, die in den Fig. 1 bis 4 veranschaulicht ist. Befindet sich die mit der Wand 8 verbundene Wand auf der anderen Seite der Lagerachse 4, erfolgt ein Ummontieren der Anordnung von Schwimmer 13 und Blende 12 dahingehend, dass diese bezüglich einer die Lagerachse 4 durchsetzenden Vertikalebene aus dieser Position in die bezogen auf diese Vertikalebene gespiegelte zweite Position ummontiert wird. Hierbei wird zunächst das Lagerteil 19 von der Lagerachse 4 demontiert. Dann wird der Schwimmer vom Schwimmerarm 16 gelöst und in einer um 180° gedrehten Stellung wieder mit dem Schwimmerarm 16 verbunden. Ferner wird die Verbindung von Lagerteil 19 und Blendenteil 20 gelöst und das Blendenteil 20 in der anderen Position des Blendenteils 20 auf der abgewandten Seite des Lagerteils 19, bei somit unveränderter Position des Blendenteils 20 bezüglich des Lagerteils 19, mit dem Lagerteil 19 wieder verbunden. Diese Ummontage des Blendenteils 20 ist deshalb erforderlich, weil bei unverändertem horizontalem Abstand des Lagerteils 19 zur Grundplatte 3 das Blendenteil 20 denselben geringen Abstand zur Stirnkante 15 des Rohrstutzens 5 besitzen muss, wie in der anderen Montageposition. Anschließend wird das Lagerteil 19 wieder auf die Lagerachse 4 aufgesteckt und bezüglich dieser axial gesichert.

### Bezugszeichenliste

- 1: Abflussmengenregler
- 2: Basiselement
- 3: Grundplatte
- 4: Lagerachse
- 5: Rohrstutzen
- 6: Längsachse
- 7: Längsachse
- 8: Wand
- 9: Hülse
- 10: Verstrebung
- 11: Loch
- 12: Blende
- 13: Schwimmer
- 14: Öffnung
- 15: Stirnkante
- 16: Schwimmerarm
- 17: Aufnahme
- 18: Schraubverbindung
- 19: Lagerteil
- 20: Blendenteil
- 21: Schlitz
- 22: Lagerbuchse
- 23: Lagerbuchse
- 24: Anschlag
- 25: Lagerbuchse
- 26: Schraube
- 27: Gewindebohrung
- 28: Stirnseite
- 29: Lochbohrung
- 30: Lochbohrung

## Patentansprüche

1. Abflussmengenregler (1) für einen Auslauf eines Flüssigkeitsbehälters, insbesondere für einen Auslauf eines Beckens, wobei der Abflussmengenregler (1) ein Basiselement (2) mit einer Grundplatte (3), einer Lagerachse (4), die mit der Grundplatte (3) verbunden ist und sich senkrecht zu dieser erstreckt, sowie mit einem Rohrstutzen (5) zum Durchleiten der Flüssigkeit, der mit der Grundplatte (3) verbunden ist, aufweist, sowie der Abflussmengenregler (1) eine schwenkbar in der Lagerachse (4) gelagerte, senkrecht zu dieser angeordnete Blende (12) und einen mit der Blende (12) verbundenen Schwimmer (13) aufweist, wobei eine der Grundplatte (3) abgewandte Öffnung (14) des Rohrstutzens (5) entsprechend der Schwenkstellung der Blende (12) durch diese abblendbar ist, die Anordnung von Blende (12) und Schwimmer (13) bezüglich einer die Lagerachse (4) durchsetzenden Vertikalebene aus einer ersten Position in eine bezogen auf die Vertikalebene gespiegelte zweite Position ummontierbar ist, **dadurch gekennzeichnet, dass** der Schwimmer (13) im Bereich eines Endes mit der Blende unmittelbar verbunden ist oder ein Schwimmerarm (16) die Blende (12) und den Schwimmer (13) verbindet, wobei der Schwimmer (13) von der Blende (12) demontierbar und in einer, bezogen auf einen Hebelarm zwischen Schwimmer (13) und Drehachse (6) der Blende (12), um 180° gedrehten Stellung montierbar ist.

2. Abflussmengenregler (1) nach Anspruch 1, **dadurch gekennzeichnet, dass** der Schwimmer (13) als Zylinder ausgebildet ist, wobei die Zylinderachse horizontal angeordnet ist.

3. Abflussmengenregler (1) nach Anspruch 2, **dadurch gekennzeichnet, dass** der Schwimmerarm (16) fest mit der Blende (12) verbunden ist und der Schwimmer (13) lösbar mit dem Schwimmerarm (16) verbunden ist.

4. Abflussmengenregler (1) nach Anspruch 1 bis 3, **dadurch gekennzeichnet, dass** der Schwimmerarm (16) als Vierkantrohr ausgebildet ist, wobei der Schwimmer (13) mit einer im Querschnitt viereckigen Aufnahme (17) für den Schwimmerarm (16) verbunden ist.

5. Abflussmengenregler (1) nach einem der Ansprüche 1 bis 4, **dadurch gekennzeichnet, dass** der Schwimmerarm (16) als Vierkantrohr ausgebildet ist, wobei die Blende (12) in einen Schlitz (21) des Schwimmerarms (16) eingesteckt und in diesem Bereich des Schwimmerarms (16) mit diesem verbunden ist, insbesondere verschweißt ist.

6. Abflussmengenregler (1) nach einem der Ansprüche 1 bis 5, **dadurch gekennzeichnet, dass** die Blende (12) zweiteilig ausgebildet ist.

7. Abflussmengenregler (1) nach Anspruch 6, **dadurch gekennzeichnet, dass** die Blende (12) ein Lagerteil (19), das schwenkbar in der Lagerachse (4) gelagert und mit dem Schwimmer (13) verbunden ist, sowie ein mit dem Lagerteil (19) verbundenes Blendenteil (20) zum Abblenden der Auslauföffnung (14) aufweist.

8. Abflussmengenregler (1) nach Anspruch 7, **dadurch gekennzeichnet, dass** das Lagerteil (19) und das Blendenteil (20) jeweils als Platte ausgebildet sind und Lagerteil (19) und Blendenteil (20) im Bereich zugewandter Flächenseiten überlappend angeordnet miteinander verbunden sind, wobei in der ersten Position das Blendenteil (20) auf der einen Seite des Lagerteils (19) angeordnet ist und in der zweiten, ummontierten Position das Blendenteil (20) auf der dieser Seite abgewandten Seite des Lagerteils (19), bei sonst unveränderter Position des Blendenteils (20) bezüglich des Lagerteils (19), angeordnet ist.

9. Abflussmengenregler (1) nach einem der Ansprüche 6 bis 8, **dadurch gekennzeichnet, dass** das Blendenteil (20) bezüglich des Lagerteils (19) in unterschiedlichen Stellungen montierbar ist, zwecks Verändern des Abblendverhaltens in Abhängigkeit von der Hubstellung des Schwimmers (13).

10. Abflussmengenregler (1) nach einem der Ansprüche 7 bis 9, **dadurch gekennzeichnet, dass** das Lagerteil (19) mit dem Schwimmer (13) verbunden ist.

11. Abflussmengenregler (1) nach einem der Ansprüche 7 bis 10, **dadurch gekennzeichnet, dass** das Lagerteil (19) schwenkbar in der Lagerachse (4) gelagert ist.

12. Abflussmengenregler (1) nach einem der Ansprüche 1 bis 11, **dadurch gekennzeichnet, dass** Mittel (26, 27) zum axialen Sichern der Blende (12) bzw. des Lagerteils (19) in der Lagerachse (4) vorgesehen sind.

## Claims

1. Flow rate regulator (1) for an outlet of a liquid container, in particular for an outlet of a basin, wherein the flow rate regulator (1) has a base element (2) with a main plate (3), a bearing pin (4), which is connected to the main plate (3) and extends perpendicularly thereto, and with a pipe attachment piece (5) through which the liquid passes and which is connected to the main plate (3), and the flow rate regulator (1) has a screen (12), which is mounted pivotably in the bearing pin (4) and is arranged perpendicularly to the latter, and a float (13) which is connected to the screen (12), wherein an opening (14) of the pipe attachment piece (5), directed away from the main plate (3), can be screened off by the screen (12), according to the pivoting position of the latter, the arrangement of screen (12) and float (13), with respect to a vertical plane passing through the bearing pin (4), can be changed around from a first position to a second position that is mirror-inverted relative to the vertical plane, **characterized in that** the float (13), in the region of one end thereof, is connected directly to the screen, or a float arm (16) connects the screen (12) and the float (13), wherein the float (13) can be dismounted from the screen (12) and can be mounted in a position rotated through 180° relative to a lever arm between the float (13) and the rotation axis (6) of the screen (12).

2. Flow rate regulator (1) according to Claim 1, **characterized in that** the float (13) is configured as a cylinder, wherein the cylinder axis is arranged horizontally.

3. Flow rate regulator (1) according to Claim 2, **characterized in that** the float arm (16) is connected rigidly to the screen (12), and the float (13) is connected detachably to the float arm (16).

4. Flow rate regulator (1) according to Claims 1 to 3, **characterized in that** the float arm (16) is configured as a quadrilateral tube, wherein the float (13) is connected to a receptacle (17) of square cross section for the float arm (16).

5. Flow rate regulator (1) according to one of Claims 1 to 4, **characterized in that** the float arm (16) is configured as a quadrilateral tube, wherein the screen (12) is inserted into a slit (21) of the float arm (16) and, in this region of the float arm (16), is connected thereto, in particular welded thereto.

6. Flow rate regulator (1) according to one of Claims 1 to 5, **characterized in that** the screen (12) is configured in two parts.

7. Flow rate regulator (1) according to Claim 6, **characterized in that** the screen (12) has a bearing part (19), which is mounted pivotably in the bearing pin (4) and is connected to the float (13), and a screen part (20), which is connected to the bearing part (19) and serves to screen off the outlet opening (14).

8. Flow rate regulator (1) according to Claim 7, **characterized in that** the bearing part (19) and the screen part (20) are in each case configured as a plate, and the bearing part (19) and the screen part (20) are connected to each other so as to overlap each other in the region of surface sides facing each other, wherein, in the first position, the screen part (20) is arranged on one side of the bearing part (19), and, in the second, unmounted position, the screen part (20) is arranged on the side of the bearing part (19) directed away from the latter side, the position of the screen part (20) relative to the bearing part (19) being otherwise unchanged.

9. Flow rate regulator (1) according to one of Claims 6 to 8, **characterized in that** the screen part (20) is mountable in different positions relative to the bearing part (19), for the purpose of changing the screening behaviour in accordance with the stroke position of the float (13).

10. Flow rate regulator (1) according to one of Claims 7 to 9, **characterized in that** the bearing part (19) is connected to the float (13).

11. Flow rate regulator (1) according to one of Claims 7 to 10, **characterized in that** the bearing part (19) is mounted pivotably in the bearing pin (4).

12. Flow rate regulator (1) according to one of Claims 1 to 11, **characterized in that** means (26, 27) are provided for axially securing the screen (12) and the bearing part (19) in the bearing pin (4).

## Revendications

1. Régulateur de débit d'écoulement (1) pour une sortie d'un récipient de liquide, en particulier pour une sortie d'un bassin, le régulateur de débit d'écoulement (1) comprenant un élément de base (2) doté d'une plaque de base (3), d'un axe de palier (4) qui est relié à la plaque de base (3) et s'étend perpendiculairement à celle-ci, et doté d'un manchon tubulaire (5) pour le guidage du liquide, lequel manchon tubulaire est relié à la plaque de base (3), et le régulateur de débit d'écoulement (1) comprenant un obturateur (12) monté pivotant dans l'axe de palier (4) et disposé perpendiculairement à celui-ci et un flotteur (13) relié à l'obturateur (12), une ouverture (14) du manchon tubulaire (5) opposée à la plaque de base (3) pouvant, en fonction de la position de pivotement de l'obturateur (12), être obturée par celui-ci, l'ensemble constitué de l'obturateur (12) et du flotteur (13) pouvant, par rapport à un plan vertical traversant l'axe de palier (4), être remonté à partir d'une première position dans une deuxième position en symétrie miroir par rapport au plan vertical, **caractérisé en ce que** le flotteur (13) est relié directement à l'obturateur dans la région d'une extrémité ou un bras de flotteur (16) relie l'obturateur (12) et le flotteur (13), le flotteur (13) pouvant être démonté de l'obturateur (12) et pouvant être monté dans une position tournée de 180° par rapport à un bras de levier entre le flotteur (13) et l'axe de rotation (6) de l'obturateur (12) .

2. Régulateur de débit d'écoulement (1) selon la revendication 1, **caractérisé en ce que** le flotteur (13) est réalisé sous forme de cylindre, l'axe de cylindre étant disposé horizontalement.

3. Régulateur de débit d'écoulement (1) selon la revendication 2, **caractérisé en ce que** le bras de flotteur (16) est relié solidement à l'obturateur (12) et le flotteur (13) est relié de manière amovible au bras de flotteur (16).

4. Régulateur de débit d'écoulement (1) selon les revendications 1 à 3, **caractérisé en ce que** le bras de flotteur (16) est réalisé sous forme de tuyau à section quadrangulaire, le flotteur (13) étant relié à un logement (17) quadrangulaire en section transversale pour le bras de flotteur (16).

5. Régulateur de débit d'écoulement (1) selon l'une des revendications 1 à 4, **caractérisé en ce que** le bras de flotteur (16) est réalisé sous forme de tuyau à section quadrangulaire, l'obturateur (12) étant enfiché dans une fente (21) du bras de flotteur (16) et étant relié, en particulier soudé, à celle-ci dans cette région du bras de flotteur (16).

6. Régulateur de débit d'écoulement (1) selon l'une des revendications 1 à 5 **caractérisé en ce que** l'obturateur (12) est réalisé en deux parties.

7. Régulateur de débit d'écoulement (1) selon la revendication 6, **caractérisé en ce que** l'obturateur (12) comprend une partie de palier (19) qui est montée pivotante dans l'axe de palier (4) et est reliée au flotteur (13), ainsi qu'une partie d'obturateur (20) reliée à la partie de palier (19) pour l'obturation de l'ouverture de sortie (14).

8. Régulateur de débit d'écoulement (1) selon la revendication 7, **caractérisé en ce que** la partie de palier (19) et la partie d'obturateur (20) sont réalisées respectivement sous forme de plaques et la partie de palier (19) et la partie d'obturateur (20) sont reliées l'une à l'autre de manière disposée en chevauchement dans la région de côtés de surface en regard, la partie d'obturateur (20) étant disposée sur l'un des côtés de la partie de palier (19) dans la première position et, dans la deuxième position remontée, la partie d'obturateur (20) étant disposée sur le côté de la partie de palier (19) opposé à ce côté, en cas de position par ailleurs inchangée de la partie d'obturateur (20) par rapport à la partie de palier (19).

9. Régulateur de débit d'écoulement (1) selon l'une des revendications 6 à 8, **caractérisé en ce que** la partie d'obturateur (20) peut être montée dans différentes positions par rapport à la partie de palier (19) en vue de changer le comportement d'obturation en fonction de la position de levée du flotteur (13).

10. Régulateur de débit d'écoulement (1) selon l'une des revendications 7 à 9, **caractérisé en ce que** la partie de palier (19) est reliée au flotteur (13).

11. Régulateur de débit d'écoulement (1) selon l'une des revendications 7 à 10, **caractérisé en ce que** la partie de palier (19) est montée pivotante dans l'axe de palier (4) .

12. Régulateur de débit d'écoulement (1) selon l'une des revendications 1 à 11, **caractérisé en ce que** des moyens (26, 27) de fixation axiale de l'obturateur (12) ou de la partie de palier (19) dans l'axe de palier (4) sont prévus.
